# FASCICULE DE BREVET EUROPEEN

(11) **EP 3 384 608 B1**
(45) Date de publication et mention de la délivrance du brevet: **11.08.2021**
(21) Numéro de dépôt: 16815593.5
(22) Date de dépôt: 24.11.2016
(51) Int. Cl.: H04B 5/00, H04B 13/00

(54) **DISPOSITIF ET PROCÉDÉ DE COMMUNICATION SANS FILS**
DRAHTLOSES KOMMUNIKATIONSVERAHREN UND VORRICHTUNG
WIRELESS COMMUNICATION DEVICE AND METHOD

(30) Priorité: 30.11.2015 FR 1561583
(43) Date de publication de la demande: 10.10.2018
(73) Titulaire: ORANGE, 92130 Issy-les-Moulineaux (FR)
(72) Inventeur: LEVIONNAIS, Philippe, 14000 Caen (FR); PICQUENOT, David, 14280 Authie (FR)
(86) Numéro de dépôt international: PCT/FR2016/053073
(87) Numéro de publication internationale: WO 2017/093639

(56) Documents cités:
- WO-A1-2006/120582
- WO-A1-2008/015591
- WO-A1-2008/015627
- WO-A1-2012/131224

## Description

L'invention concerne les communications sans fils à courte portée pour la transmission de données entre deux dispositifs par l'intermédiaire du corps humain. Plus précisément, l'invention porte sur un système pour effectuer des transactions entre un dispositif portatif et une station de base, ou lecteur, connectée par exemple à un serveur de transactions, en utilisant la capacité de conductivité du corps humain pour transmettre les ondes électromagnétiques porteuses de telles communications sans fils.

### Etat de la technique

Les communications en champ proche, usuellement connues sous le sigle « NFC » (pour « Near Field Communication »), basées principalement sur la norme ISO (International Standard Organisation) 14443, utilisent des technologies sans fils pour permettre un échange d'informations entre deux périphériques éloignés d'une courte distance, typiquement inférieure à dix centimètres. Les communications de ce type offrent de nombreuses applications, par exemple dans les domaines du paiement et du transport. Le récepteur en champ proche reçoit un message de la part de l'émetteur en champ proche. Un tel message peut correspondre, dans le contexte précité, à l'échange d'un ticket (de spectacle, de transport, etc.), au paiement ou à la validation d'une transaction, etc.

On connaît dans l'état de la technique un système permettant d'échanger de tels messages en utilisant la capacité de conductivité du corps humain pour transmettre les ondes électromagnétiques porteuses de telles communications sans fils.

La demande de brevet internationale publiée sous le numéro WO2012/131224 décrit un système de communication comprenant un dispositif émetteur portatif dont l'antenne est directement en contact avec, ou très proche, de l'utilisateur, que l'on appelle ici le « porteur ». Le signal est modulé au moyen d'un modulateur basse fréquence et transmis à travers le corps de l'utilisateur. Il est en effet connu que le corps humain présente des capacités de conduction adaptées pour véhiculer de tels signaux électromagnétiques dès lors que l'antenne est située à proximité (à moins de quelques centimètres) du corps de l'utilisateur et conçue de manière à rendre l'objectif attendu ; elle est constituée à cet effet d'un ensemble de spires en nombre et disposition adéquats pour émettre de façon optimale l'onde à travers le corps humain. Par la suite, un dispositif NFC équipé d'une telle antenne sera appelé dispositif « Bodypass », en référence à la validation d'une communication à travers le corps humain, de traduction anglaise « body». Ce système selon l'état de l'art comporte aussi un récepteur qui comprend une surface réceptrice constituée au moins d'une antenne de même type que celle de l'émetteur et sur laquelle l'utilisateur peut poser la main. Le dispositif récepteur reçoit le signal du fait du contact physique, ou du moins de la proximité, de l'utilisateur avec l'antenne. Le signal reçu est démodulé et transmis à l'équipement adapté pour effectuer des traitements, en l'espèce pour mettre en œuvre la transaction (paiement, ouverture de porte, etc.). Cet équipement s'appellera dans la suite « station de base », ou plus simplement « lecteur », ou encore « borne », « Terminal Electronique de Paiement (TPE) », etc. Le système décrit comprend un seul canal d'émission et de réception, en l'espèce l'antenne, qui, grâce à un commutateur, peut fonctionner alternativement en mode émission et en mode réception. Une telle architecture assure la bidirectionnalité des échanges, nécessaire au déroulement de la transaction.

Bien que cette architecture autorise le porteur à conserver son dispositif portable dans une poche, un sac, etc., elle est contraignante : il doit attendre la fin de la transaction pour s'éloigner du lecteur. Ce temps d'attente peut être assez long car le débit de données échangées dans un tel système est relativement faible dans l'état de la technique actuel. L'utilisateur doit se tenir à proximité physique du lecteur, en maintenant par exemple une main sur la surface réceptrice, et n'a donc pas les mains libres pendant la durée de la transaction.

La demande de brevet WO 2006/120582 A1 décrit un procédé de communication en utilisant comme canal de communication pour appairer deux appareils portés par un utilisateur le corps humain par couplage électrostatique. La communication par le corps humain sert à l'appairage Bluetooth. Ensuite, les 2 appareils communiquent selon un protocole de communication Bluetooth.

L'invention offre une solution ne présentant pas les inconvénients de l'état de la technique.

### L'invention

A cet effet, selon un aspect fonctionnel, l'invention concerne un procédé de communication selon la revendication 1.

Selon l'invention, deux phases s'enchaînent sur le terminal de manière transparente pour l'utilisateur, afin de rendre le service. Tout d'abord une phase sans contact de type Bodypass, qui peut être considérée comme un pré-appairage, est initiée par un dispositif externe, ou lecteur. Une onde porteuse radio est transmise depuis le lecteur à travers le corps d'un utilisateur porteur du terminal. Naturellement, cette transmission ne peut avoir lieu que si l'utilisateur se trouve avec son terminal à proximité du lecteur, puisque les communications de type Bodypass telles que présentées ci-dessus ne peuvent s'accomplir que lorsque l'utilisateur est très proche (de l'ordre de quelques centimètres) du lecteur. Typiquement, il pose sa main sur la surface réceptrice comportant l'antenne Bodypass du lecteur.

Le terminal est typiquement un téléphone portable (*smartphone*) équipé d'une antenne de type « Bodypass » telle que définie au préalable, et situé par exemple dans l'une des poches de l'utilisateur, dans son sac, etc. L'utilisateur n'est donc pas nécessairement en contact direct avec le terminal, en revanche il doit être à proximité immédiat dans le sens d'une communication par ondes porteuses (quelques centimètres). En d'autres termes l'utilisateur n'est pas contraint de toucher le terminal. En particulier il n'est pas obligé de toucher une zone spécifique du terminal. Par ailleurs le terminal peut être isolé du porteur par une couche de tissus, etc. L'isolation galvanique n'empêche pas la communication.

Le lecteur est typiquement une borne équipée d'une antenne de type NFC « Bodypass » apte à émettre un message porté par une onde. Cette onde porteuse porte un message modulant la porteuse, par exemple de type « JE_SUIS_UNE_REQUETE_BODYPASS » ou plus simplement « BODYP ».

Par appairage, ou appariage, on entend l'ensemble des opérations qui permettent à deux dispositifs (ici le terminal et le lecteur) de se reconnaître dans le but de communiquer ensemble sur un canal donné de communication, ici appelé second canal de communication.

Le message émis par le lecteur contient également une donnée d'appairage, par exemple un aléa, utile pour établir une communication sur le second canal. Ce message a par exemple pour but d'inviter l'utilisateur à entrer en contact avec un lecteur afin de débiter un ticket qui se trouve sur son terminal et d'ouvrir le portillon dans un système de transport en commun, ou de débiter un certain montant sur le terminal, dans le contexte d'une transaction financière. Selon ce système, l'utilisateur peut ainsi conserver son terminal mobile dans une poche ou un sac sans le sortir pour le présenter au lecteur, il lui suffit classiquement de s'en approcher jusqu'à poser sa main sur l'antenne ou l'effleurer.

Avantageusement selon l'invention, le terminal est aussi apte à émettre ou recevoir un message sur un second canal, de préférence sans fils, qui n'utilise pas les capacités de conduction du corps de l'utilisateur. Ce canal peut être tout type de canal de communication sans fils (typiquement, radio) connu de l'homme du métier. Dans une deuxième phase, que l'on peut considérer comme une phase d'appairage à proprement parler, succédant au pré-appairage, ce canal de communication est ouvert entre les deux dispositifs, le terminal et le lecteur.

Ainsi l'utilisateur peut être en contact ou non avec le lecteur au moment de la communication sur le second canal. Avantageusement, l'utilisateur peut donc s'écarter rapidement du lecteur après être rentré en contact lors de la première phase de pré-appairage, puisque tous les échanges subséquents avec le lecteur sont véhiculés par un canal radio traditionnel qui n'utilise pas son corps (WiFI, Bluetooth, etc.), et dont la portée est supérieure à celle du Bodypass (ou du NFC).

Avantageusement, sur ce second canal, l'utilisateur peut bénéficier d'un débit plus élevé que celui offert par une communication Bodypass standard. De surcroît ce second canal peut offrir une sécurisation accrue des échanges.

L'enchaînement de ces deux étapes sur les deux canaux différents autorise donc l'utilisateur à bénéficier du service, par exemple de paiement, en n'ayant jamais sorti le terminal de sa poche, et en s'écartant toutefois librement du lecteur dès que la phase initiale de pré-appairage avec le lecteur, sur Bodypass, est achevée.

On notera de surcroît que le terminal doit être capable de recevoir des messages sur le premier canal Bodypass mais n'en émet pas sur ce même canal, seulement sur le second canal. La réception se fait de manière conforme à la demande précitée WO2012/131224. Avantageusement, l'absence d'émission d'une telle onde porteuse diminue les risques pour la santé du porteur.

Selon un mode de mise en œuvre particulier de l'invention, un procédé de communication tel que décrit ci-dessus est en outre caractérisé en en ce que l'établissement de ladite session de communication avec le second dispositif inclut une étape d'émission d'un second message comportant au moins une seconde donnée d'appairage sur le second canal, ladite seconde donnée d'appairage étant fonction de la première donnée d'appairage.

Avantageusement selon ce mode de réalisation de l'invention, après que le terminal de l'utilisateur a reçu via le canal Bodypass le message comportant la donnée d'appairage, il utilise le second canal pour transmettre en retour vers le lecteur un message qui contient une seconde donnée d'appairage générée à partir de la première donnée d'appairage (il peut s'agir de la même donnée, par exemple un aléa). Cette donnée permet au lecteur de reconnaître la donnée qu'il a émise précédemment dans le premier message et d'établir classiquement une communication bidirectionnelle entre les deux dispositifs, appairés sur le second canal, pour échanger les données du service. Cette méthode est notamment conforme à un certain nombre de normes comme par exemple la norme Bluetooth, une technologie de réseau de faible portée permettant de relier des appareils entre eux sans liaison filaire.

Selon un second mode de mise en œuvre particulier de l'invention, qui pourra être mis en œuvre alternativement ou cumulativement avec le précédent, un procédé de communication tel que défini ci-dessus est en outre caractérisé en ce que le premier message comporte également un identificateur de service.

Avantageusement selon ce mode, plusieurs services Bodypass peuvent être proposés à l'utilisateur via son terminal. Si le terminal dispose par exemple d'une application de transport Bodypass et d'une application de paiement Bodypass, la réception d'un identificateur du service par le terminal permet de sélectionner un service parmi les deux, par exemple le service de transport, en lançant sur le terminal une application dédiée (au transport dans ce cas) chargée de l'émission du second message vers le lecteur sur le second canal puis des opérations suivantes liées au service.

Selon un aspect matériel, l'invention concerne aussi un dispositif de communication selon la revendication 4.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect fonctionnel, l'invention concerne aussi un procédé de communication selon la revendication 5.

On notera que n'importe quel lecteur du commerce peut avantageusement être utilisé, à condition de bénéficier de l'option BodyPass. L'option consiste simplement en une mise à jour du logiciel du lecteur.

Selon un autre aspect matériel, l'invention concerne aussi un système de communication selon la revendication 6.

Selon un aspect fonctionnel, l'invention porte également sur un programme chargeable dans la mémoire d'un dispositif terminal, le programme comprenant des portions de code pour l'exécution des étapes du procédé de communication sur le terminal selon l'invention, lorsque le programme est exécuté sur ledit dispositif terminal.

Selon un aspect fonctionnel, l'invention porte également sur un programme chargeable dans la mémoire d'un dispositif lecteur, le programme comprenant des portions de code pour l'exécution des étapes du procédé selon l'invention, lorsque le programme est exécuté sur ledit dispositif lecteur.

L'invention concerne aussi un support de données partiellement ou totalement amovible, comportant des instructions de code de programme pour l'exécution des étapes des procédés selon l'invention.

De nombreux détails et avantages de l'invention seront mieux compris à la lecture de la description d'un mode particulier de réalisation en référence aux schémas annexés donnés à titre non limitatif et dans lesquels :
- la figure 1 représente un système de communication sans fils selon un mode de réalisation de l'invention lorsque l'utilisateur du terminal sollicite un service de la part d'un lecteur ;
- la figure 2 représente un exemple de réalisation d'un dispositif terminal selon un mode de réalisation de l'invention ;
- la figure 3 représente un exemple de réalisation d'un dispositif lecteur selon un mode de réalisation de l'invention ;
- la figure 4 représente les étapes d'un procédé entre le terminal et le lecteur selon un mode de réalisation de l'invention.

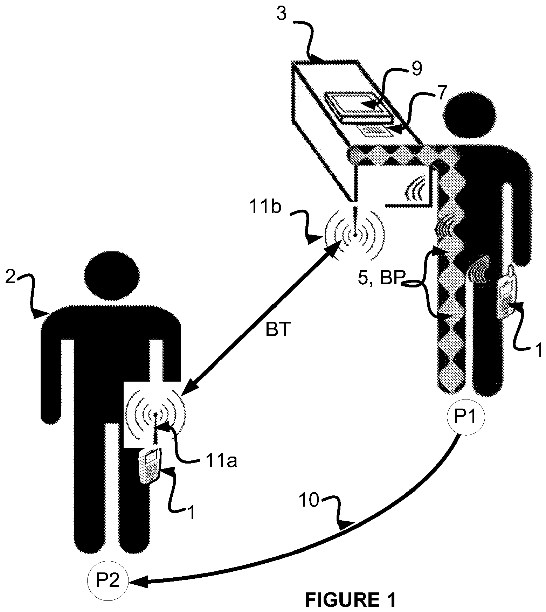

La figure 1 représente un système de communication sans fils selon un mode de réalisation de l'invention lorsqu'un utilisateur (2) porteur d'un dispositif portatif (1), appelé dans la suite terminal, équipé d'un module « Bodypass » tel que défini auparavant, s'approche d'un lecteur, ou TPE (pour Terminal Electronique de Paiement) au cours d'une transaction monétaire. Naturellement, tout autre exemple de service pourrait être illustré, par exemple une transaction de type « validation de ticket ». Dans ce cas le lecteur pourrait prendre par exemple la forme d'un portillon qui laisse passer l'utilisateur lorsque la transaction est validée.

L'utilisateur (2), ou porteur (du terminal), est par exemple un être humain mais pourrait alternativement prendre la forme d'un autre être vivant adapté pour transmettre des ondes porteuses radio.

Le terminal (1) selon l'invention est un dispositif portatif naturellement apte à recevoir des ondes porteuses radio, via une antenne, à travers le corps de l'utilisateur (2). A cette fin, le terminal (1) est situé à proximité de l'utilisateur (2), sans nécessairement être en contact direct avec celui-ci. Par exemple, le terminal (1) est placé à l'intérieur d'une poche ou d'un sac porté contre l'utilisateur. Dans ces configurations, on estime que le terminal (1) n'est pas éloigné de plus de quelques centimètres du corps de l'utilisateur (2). La distance est par exemple inférieure à 10 cm. Le terminal (1) est équipé d'une batterie ou de piles, pour un fonctionnement autonome. Il s'agit selon cet exemple d'un terminal mobile équipé d'une antenne « Bodypass » (non représentée) utilisée pour recevoir les signaux électriques modulés sous forme d'une onde électromagnétique. Cette antenne n'a pas besoin d'être configurée en émission, ce qui limite les risques pour la santé du porteur. Dans le contexte de cet exemple de réalisation, et comme déjà expliqué auparavant, l'antenne « Bodypass » est conçue de manière à recevoir de façon optimale l'onde électromagnétique à travers le corps humain ; elle est constituée à cet effet d'un ensemble de spires en nombre et disposition adéquats. Une telle antenne est décrite dans la demande précitée WO2012/131224. Le terminal portatif (1) est apte selon cet exemple à recevoir des ondes électromagnétiques à travers le corps de l'utilisateur lorsque celui-ci se trouve dans une première position P1 à proximité du lecteur.

Le lecteur (3) est un équipement apte à émettre des signaux radioélectriques, ou ondes porteuses, à travers le corps de l'utilisateur, via une antenne « Bodypass » (7). Dans cet exemple de réalisation, le lecteur (3) est un TPE classique qui comprend une surface réceptrice constituée par l'antenne (7) éventuellement protégée et adaptée pour réagir lorsque l'utilisateur l'effleure ou entre en contact avec elle, par exemple en posant la main dessus. Le terme « surface » n'est nullement limitatif et donné à titre illustratif, l'antenne étant le seul moyen indispensable au fonctionnement du BodyPass. Le lecteur selon cet exemple (3) comprend aussi une interface utilisateur (9), encore appelée IHM, destinée à afficher des messages à l'attention de l'utilisateur et à recevoir des données, par exemple via un clavier numérique, et un équipement (non représenté sur la figure 1) apte à effectuer des traitements en relation avec la transaction, tel un PC ou un serveur. La surface réceptrice recouvrant l'antenne, l'interface utilisateur et l'équipement sont connectés par exemple au moyen d'une liaison filaire, ou à travers un réseau, par exemple un réseau mobile, ou le réseau Internet.

L'utilisateur (2) est par exemple dans un magasin et souhaite payer un achat via le TPE du commerçant. Selon un autre exemple, il pourrait être dans un système de transports en commun et utiliser un service de tickets de transport dématérialisés : il aurait acheté un certain nombre de tickets de transport dont les droits seraient inscrits sur son mobile, et il devrait consommer un ticket pour pouvoir emprunter le moyen de transport, c'est-à-dire ouvrir le portillon du lecteur (3) associé au transport.

On notera que le terminal (1) peut potentiellement réaliser des transactions NFC directes s'il est approché de la borne mais qu'il est plus intéressant d'utiliser des transactions « Bodypass » via le corps de l'utilisateur puisque ceci lui évite de sortir le terminal de sa poche, son sac, etc., ce qui offre à la fois une grande liberté de mouvement et une sécurité intéressante (contre le vol, la chute, etc. du terminal). Avantageusement selon la technologie Bodypass, il peut laisser le téléphone dans sa poche et établir avec la borne un contact manuel. On rappelle que ce système de communication, utilisant les propriétés du corps humain pour conduire certains types d'ondes, et notamment mais sans limitation les signaux radio de type NFC, est décrit par exemple dans la demande de brevet publiée sous le numéro WO2012/131224. Le signal Bodypass (5, BP) est représenté schématiquement sur la figure 1 comme traversant le corps humain sous forme d'une onde.

Le terminal (1) et le lecteur (3) disposent par ailleurs classiquement de modules radio (resp. 11a, 11b) qui leur permettent de communiquer selon un protocole de communication sans fils connu, par exemple Bluetooth ou Wi-Fi. On rappelle que le Bluetooth est une technologie de réseau de faible portée permettant de relier des appareils entre eux sans liaison filaire. Bluetooth permet de transmettre des données ou de la voix entre des équipements équipés de modules radio, sur un rayon de l'ordre d'une dizaine de mètres à un peu moins d'une centaine de mètres et avec une faible consommation électrique. Le Bluetooth utilisé dans cet exemple de réalisation est de préférence de type Bluetooth Low Energy, ou BLE, caractérisé par une consommation très faible et une distance de fonctionnement de l'ordre du mètre (3 ou 4 au maximum), ce qui est suffisant pour le type de transactions visées. Le terme Wi-Fi recouvre pour sa part un ensemble de normes de la spécification IEEE 802.11 pour des communications sans fils pouvant aller jusqu'à quelques centaines de mètres. Dans le contexte qui nous intéresse, l'utilisateur porteur du terminal procède en deux phases :
- Dans un premier temps, qui correspond à une phase de « pré-appairage », l'utilisateur s'approche du lecteur (3) et pose sa main au-dessus de la surface réceptrice comprenant l'antenne (7) ; il se trouve dans une position 1 (notée P1) ; l'application Bodypass installée sur le lecteur (1) émet un message initial. Par exemple, un message « BODYP » est émis sous forme de signal modulé pour signifier « je suis un lecteur qui attend une application de type Bodypass ». Selon ce mode de réalisation, le message comprend également une donnée qui peut être par exemple un aléa (c'est-à-dire une valeur aléatoire) générée par le lecteur pour l'établissement ultérieur d'une communication ; le signal modulé (5) porteur du message « BODYP » et de l'aléa est véhiculé par le corps de l'utilisateur jusqu'à son terminal (qui se trouve par exemple dans sa poche), démodulé, éventuellement décodé et analysé.
- Dans un second temps, qui correspond à une phase d'appairage entre le terminal et le lecteur, l'utilisateur retire sa main du lecteur et peut se déplacer pour passer dans une position P2. Son mouvement est symbolisé par la flèche 10. On notera que ce mouvement est facultatif mais qu'il n'est pas très agréable de rester en contact avec le lecteur si ce n'est pas nécessaire, et que l'utilisateur préfèrera vraisemblablement avoir les mains libres. Le terminal (1), si l'analyse du message reçu précédemment est correcte, initie la transaction. Pour ce faire, il procède à un appairage avec le lecteur. Il émet un message radio à l'aide d'un module d'émission schématisé sur la figure par une antenne (11a), sur un canal de communication distinct de celui utilisé pour le premier échange. Il s'agit, selon cet exemple, d'un canal de type Bluetooth (BT). Le message est reçu sur le canal Bluetooth par le lecteur. Il porte, selon cet exemple, l'aléa qui a été fourni au terminal par le lecteur lors de la phase précédente ; le lecteur, reconnaissant son aléa, accepte la communication. Classiquement, une session de communication est ouverte entre les deux dispositifs appairés. Ces derniers peuvent alors échanger toutes les données nécessaires à l'établissement, la poursuite et la conclusion de la transaction (débit d'argent, de ticket, etc.).

Cet exemple de réalisation a été donné à titre illustratif et nullement limitatif.

Notamment, le message émis par le terminal sur le canal radio véhicule selon cet exemple l'aléa qui a été fourni en BodyPass par le lecteur. Cet exemple n'est pas limitatif. Notamment l'aléa peut être modifié avant l'insertion dans le message, selon tout procédé à la portée de l'homme du métier, du moment que le lecteur est capable de reconnaître la donnée qu'il a émis afin de réaliser l'appairage. Dans le contexte d'une communication Bluetooth « standard », le dispositif « maître » (ici le lecteur) envoie un nombre aléatoire au dispositif « esclave » (ici le terminal). L'esclave renvoie son adresse Bluetooth (Un périphérique Bluetooth dispose d'une adresse unique, comme l'adresse MAC des cartes réseau. Cette adresse est formée de 48 bits : les trois premiers octets identifient le fabricant, les trois suivants sont ceux attribués au périphérique). À partir de ce nombre aléatoire, de l'adresse Bluetooth (notée @MAC pour des raisons de simplicité) et éventuellement d'un code de type PIN (entré sur les deux périphériques), une clef de chiffrage est calculée pour l'échange des messages entre le maître et l'esclave.

Ainsi, la phase initiale d'envoi du nombre aléatoire est réalisée via la technologie BodyPass (pré-appairage) sur le premier canal en champ proche, puis les autres opérations (appairage et communication subséquente) sont effectuées sur le second canal en Bluetooth, de manière tout à fait standard.

Alternativement, toute autre communication de type « sans fils » pourrait être utilisée (liaison sans fils de type Wi-Fi, DECT, Zigbee, etc.), voire même une liaison filaire, du moment que le canal utilisé n'exploite pas les propriétés de conduction du corps de l'utilisateur (2) et ne l'oblige donc pas à rester à proximité immédiate du lecteur. Avantageusement, le second canal permet de bénéficier d'un débit plus élevé que celui offert par une communication Bodypass et peut offrir une sécurisation supplémentaire des échanges.

Aussi, de nombreux autres exemples de services peuvent être mis en œuvre selon les principes énoncés ci-dessus, notamment dans le domaine des transports, comme déjà mentionné. Selon un autre exemple, l'utilisateur souhaite louer une voiture ; dans ce cas, le lecteur peut se trouver dans la poignée de la porte de la voiture, ou dans la serrure, etc. Au moment de la location, une application spécifique peut être délivrée sur le terminal mobile de l'utilisateur par le loueur de voiture ; au moment de prendre le véhicule, cette application est « réveillée » par la phase de pré-appairage décrite précédemment, lorsque l'utilisateur approche la main de la poignée de la voiture. Le terminal mobile peut rester dans sa poche. La phase de pré-appairage est suivie par une phase d'appairage au cours de laquelle l'application réveillée transmet sur un lien Bluetooth un message d'appairage (comportant par exemple l'aléa reçu lors du pré-appairage et l'adresse MAC du terminal). Si l'appairage est réussi, c'est-à-dire si le lecteur de la voiture reconnaît l'aléa et accepte le terminal, la portière s'ouvre et l'utilisateur peut être connecté en Bluetooth à l'ordinateur de bord de la voiture. A aucun moment il n'a sorti le terminal de sa poche, et il est resté à proximité de la poignée seulement pendant le temps de pré-appairage.

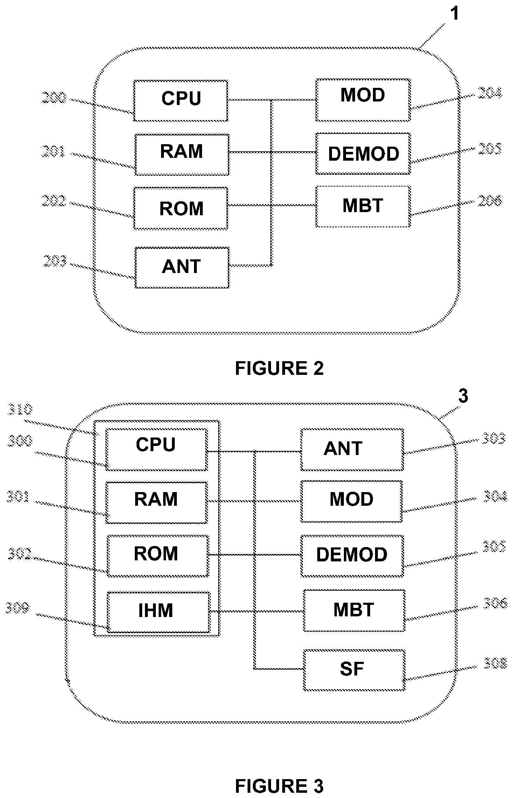

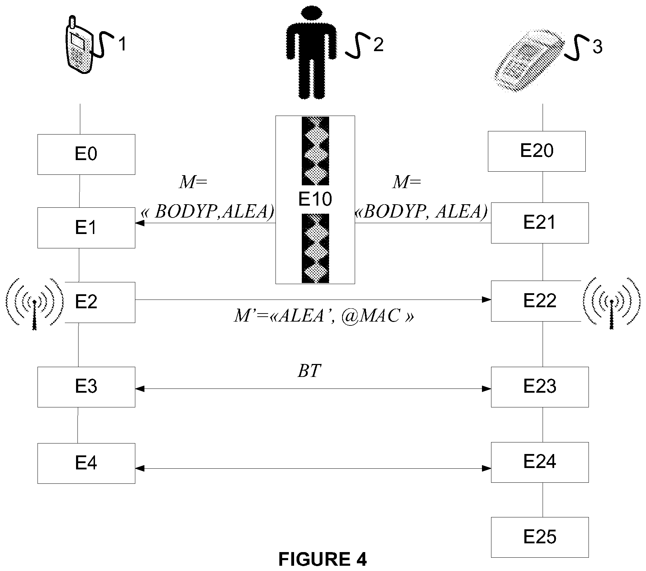

Un dispositif terminal 1 selon l'invention va maintenant être décrit en relation avec la figure 2. Le terminal (1) est par exemple un terminal mobile de type *smartphone* adapté pour mettre en œuvre l'invention. Selon un autre exemple, le terminal est une simple carte électronique équipée des modules suivants :
- une unité de traitement 200, ou « CPU » (pour « Central Processing Unit »), destinée à charger des instructions en mémoire, à les exécuter, à effectuer des opérations ;
- un ensemble de mémoires, dont une mémoire volatile 201, ou "RAM" (pour "Random Access Memory") utilisée pour exécuter des instructions de code, stocker des variables, etc. ;
- une mémoire non volatile 202, de type «ROM» (de l'anglais « Read Only Memory »), ou « EEPROM » (pour « Electronically Erasable Programmable Read Only Memory ») destinée à contenir des informations persistantes. Dans le cas d'un service de ticketing, cette mémoire peut être utilisée pour mémoriser le solde de tickets ; dans le cas d'un service de porte-monnaie électronique, le solde d'argent.
- une antenne (ANT) 203 « Bodypass » adaptée pour recevoir des signaux sur la voie radio et via le corps humain ;
- un démodulateur (DEMOD) 205, destiné à recevoir via l'antenne 203 un signal électrique modulé et à le transformer en un signal numérique destiné à être transmis à l'unité de traitement 200. Le démodulateur 205 est agencé pour mettre en œuvre l'étape E1 de démodulation du procédé de communication décrit par la suite ;
- on notera que la présence d'un modulateur (MOD) 204 (destiné à adapter si nécessaire un signal numérique produit par le microprocesseur 200 en un signal électrique modulé, destiné à être transmis via l'antenne 203) n'est pas nécessaire dans notre exemple de réalisation puisque le terminal n'émet pas de données en « Bodypass » mais pourrait être utile selon certaines variantes d'implémentation.
- un module Bluetooth (MBT) 206, destiné à émettre et recevoir des données sur un canal Bluetooth établi avec un dispositif externe apte à communiquer selon cette norme, en l'occurrence le lecteur. Le module MBT est notamment agencé pour mettre en œuvre l'étape E2 d'émission d'un message vers le lecteur (3) ainsi que les étapes E3 et E4 de réception/émission de messages relatifs à la transaction sur le canal Bluetooth, comme il sera détaillé à l'appui de la figure 4. Le module Bluetooth est relié à l'antenne, soit directement soit via le biais du téléphone mobile :
   o dans le premier cas, le module Bluetooth se trouve par exemple sur un substrat (dit « « composant Bodypass ») regroupant tous les modules nécessaires au fonctionnement du Bodypass (Antenne, démodulateur, microprocesseur, etc.). Il est relié à la sortie du démodulateur d'antenne, par le biais éventuel d'autres circuits. Il reçoit les données démodulées et éventuellement traitées par un microprocesseur, et se charge d'établir le canal de communication Bluetooth. Avantageusement dans ce cas tous les modules peuvent être regroupés sur la même entité physique et/ou logique (circuit, composant, etc. Bodypass-Bluetooth), et supportés par exemple par une carte électronique que l'utilisateur peut porter dans sa poche.
   ∘ dans le second cas, le module Bluetooth se trouve ailleurs, par exemple dans le terminal. Les signaux d'antenne démodulés sont transmis au microprocesseur du terminal qui se charge d'établir la communication Bluetooth avec le lecteur. Avantageusement dans ce cas, le module Bluetooth présent nativement sur le terminal (un *smartphone* par exemple) peut être réutilisé.

Un lecteur (3) selon l'invention (aussi appelé couramment « TPE », ou « borne ») va maintenant être décrite en relation avec la figure 3. Le lecteur comprend plusieurs modules qui sont similaires à ceux du dispositif portatif 1 décrit en relation avec la figure 2 :
- une unité de traitement 300, ou « CPU », destinée à charger des instructions en mémoire, à les exécuter, à effectuer des opérations.
- un ensemble de mémoires, dont une mémoire volatile 301, ou "RAM" (pour "Random Access Memory") utilisée pour exécuter des instructions de code, stocker des variables, etc.,
- un mémoire non volatile 302, de type « ROM » ou « EEPROM » destinée à contenir des informations persistantes ;
- une antenne (ANT) 303 « Bodypass » adaptée pour émettre des signaux sur la voie radio et via le corps humain ;
- un modulateur 304 destiné à adapter un signal numérique produit par le microprocesseur 300 en un premier signal électrique modulé, destiné à être transmis, via l'antenne 303, à travers le corps de l'utilisateur. Le modulateur 304 est agencé pour mettre en œuvre l'étape initiale E21 d'émission du message « BODYP » décrit précédemment ; l'opération de modulation effectuée par le modulateur 304 est une modulation d'amplitude par tout ou rien, appelée également modulation « OOK » (de l'anglais « On-Off Keying »). Ainsi, par exemple, le signal est un signal à 13,56 MHz modulé en amplitude tout ou rien. L'invention n'est cependant pas limitée à ce type de modulation. Dans un autre exemple de réalisation, la modulation est une modulation de fréquence, moins sensible aux parasites. On note que cette réalisation est cependant plus coûteuse car elle nécessite plus de composants. Dans un autre exemple de réalisation, une modulation de phase est réalisée.
- la présence d'un démodulateur 305 n'est pas nécessaire dans le contexte du mode de réalisation de l'invention
- une surface réceptrice (SF) 308 adaptée pour réagir à la proximité de l'utilisateur (contact, quasi-contact, effleurement, etc.). Dans l'exemple décrit ici, cette surface correspond à l'antenne 303, de manière à ce qu'un signal électrique modulé émis ou reçu via l'antenne 303 soit apte à être véhiculé par le corps de l'utilisateur qui est en contact avec la surface. Dans un exemple de réalisation, l'antenne 303 peut être intégrée dans la surface 308. La surface est agencée de manière à coopérer avec l'unité de traitement 300 pour mettre en œuvre les étapes du procédé qui sera décrit ultérieurement ;
- un module Bluetooth 306 (MBT) destiné à émettre et recevoir des données sur un canal Bluetooth établi avec un dispositif externe apte à communiquer selon cette norme, en l'occurrence le terminal mobile. Le module 304 est notamment agencé pour mettre en œuvre les étapes E23 et E24 de réception/émission de messages relatifs à la transaction sur le canal Bluetooth.
- une interface utilisateur (IHM) 309, adaptée pour transmettre à l'utilisateur des instructions ou des messages d'information. Par exemple, l'interface utilisateur 309 est un écran sur lequel les messages et instructions sont affichés. Dans un autre exemple de réalisation, l'interface 309 est une interface audio permettant de jouer les messages et instructions. L'IHM peut aussi comporter un clavier, un micro, etc. L'interface utilisateur 309 est agencée pour mettre en œuvre notamment l'étape E20 d'invitation du procédé de communication.

Le lecteur 3 est moins contraint en termes d'alimentation et de taille que le terminal 1. Ainsi, les modules unité de traitement 300, mémoires volatile 301 et non volatile 302 et interface utilisateur 309 sont, dans un exemple de réalisation, intégrés dans un ordinateur 310 de type PC ou serveur qui peut être alimenté par le secteur. L'ordinateur 310 est interfacé avec les composants (surface (SF) 308 couplée à l'antenne 303, démodulateur 305,etc.) par exemple au moyen d'une interface filaire.

On notera que n'importe quel lecteur du commerce peut avantageusement être utilisé, à condition de bénéficier de l'option Bodypass, option consistant simplement en une mise à jour du logiciel du lecteur équipé d'une antenne Bodypass, pour le rendre apte à émettre un message possédant les caractéristiques (fréquence, modulation, etc.) Bodypass via son antenne.

La figure 4 représente les étapes d'un procédé de communication sans fils bidirectionnelle à travers le corps humain entre un mobile (1) équipé d'une antenne « Bodypass » porté par un utilisateur (2), et un TPE (lecteur, 3) équipée d'une antenne « Bodypass », aptes à établir de surcroît un canal de communication Bluetooth de manière à libérer la main de l'utilisateur.

Dans une étape initiale E20 d'invitation, le lecteur (3) affiche éventuellement un message à l'écran : montant d'une transaction, invite à poser sa main sur la surface réceptrice pour valider un ticket de transport, etc.

L'utilisateur (2) équipé du dispositif portatif (1) approche du lecteur et lit éventuellement le message. L'utilisateur a positionné son dispositif mobile dans un état adéquat (Bluetooth et Bodypass actifs) lors d'une étape E0 initiale.

Au cours d'une étape d'émission E21, le lecteur 3 émet via son antenne un signal électrique modulé associé à un message de recherche destiné à un dispositif situé à proximité, en l'espèce le terminal (1) porté par l'utilisateur (2). Le message de recherche transmis dans le signal électrique modulé émis par le lecteur (3) est destiné selon cet exemple à entrer en contact avec un dispositif portatif situé à proximité du lecteur (3). Il est propre au service et peut comporter un identifiant de service. Plus précisément, le message de recherche comprend une pluralité d'éléments d'information destinés à être transmis en continu pendant une certaine période pendant laquelle le TPE (3) est en mode émission. Par exemple l'élément d'information consiste en un mot, « BODYP », transmis plusieurs fois dans le premier signal électrique modulé, suivi d'une donnée d'appairage, par exemple un aléa (ALEA) qui permettra d'effectuer une phase d'appairage ultérieure, suivi optionnellement d'un identifiant du service.

Dans une étape suivante E1, l'utilisateur 2 pose sa main au-dessus de l'antenne « Bodypass » de la station de base 3; le premier signal modulé électrique émis au cours de l'étape précédente est détecté et reçu par le terminal (1). En effet, l'utilisateur (2) dont la main est posée sur l'antenne Bodypass du lecteur est un vecteur de transmission du premier signal électrique émis par le lecteur (3). Le terminal (1), jusque-là en état d'attente, ou état de réception, détecte et reçoit le signal électrique modulé (M) véhiculé par le corps de l'utilisateur. Le terminal (1) démodule le premier signal électrique reçu en un premier signal numérique et initie la communication Bluetooth. Selon un autre mode de réalisation, un module BLE se trouve en contact direct avec le démodulateur connecté à l'antenne Bodypass, et il n'est pas nécessaire d'utiliser la fonction Bluetooth du terminal, même si elle existe. Dans ce cas un microprocesseur associé au démodulateur de l'antenne Bodypass peut par exemple prendre en charge la détection du message et son traitement.

A l'issue de cette étape, l'utilisateur peut s'écarter du TPE, la phase de pré-appairage étant terminée. Le premier canal (Bodypass) peut être refermé. Cette fermeture est de préférence implicite : dès que l'utilisateur s'éloigne de la borne, le canal de transmission ne peut plus véhiculer de signaux et la transmission s'interrompt. Cette étape est facultative dans la mesure où l'utilisateur peut, s'il le souhaite, rester près de la borne, avec la main posée dessus, mais ceci ne présente aucun intérêt dans le contexte de ce mode de réalisation puisque la phase de pré-appairage est terminée. Si le canal constitué par le corps de l'utilisateur reste ouvert, aucune donnée d'y transitera néanmoins plus.

Dans une étape E2, le message numérique associé à la réponse (schématisé sur la figure par M'=«ALEA', @MAC ») est transmis via l'antenne (11a) du terminal (1) sur un canal radio Bluetooth.

Dans une étape E22 de détection et de réception, le message (M') émis au cours de l'étape précédente E2 par le dispositif portatif (1) et transmis en Bluetooth est détecté et reçu par le lecteur (3).

Si le message reçu est correct (ici, il s'agit du message M' comportant l'aléa, et éventuellement l'adresse MAC-Bluetooth du terminal), le lecteur peut accepter la communication Bluetooth, avec le terminal ; le canal Bluetooth bidirectionnel est établi lors d'une étape E3 (et E23 correspondante). Les deux dispositifs sont désormais appairés sur le canal Bluetooth et peuvent communiquer.

Les étapes E4 et E24 sont des étapes de réception/émission de messages relatifs à la transaction sur le canal Bluetooth (pour valider un achat dont le montant est affiché sur la borne, un solde de ticket, ou échanger tout autre message requis pour la communication, etc.)

On notera que, selon l'état de l'art, l'utilisateur doit maintenir la main posée sur la surface réceptrice du lecteur depuis l'étape E1 de mise en contact de l'utilisateur avec le lecteur (3) jusqu'à la fin de l'étape de communication, ce qui est fastidieux. Avantageusement, il peut ici retirer la main et même s'écarter du TPE sans pour autant interrompre la communication qui se poursuit sur le canal Bluetooth.

L'étape E25 correspond à la fin de la transaction (par exemple, validation de la transaction monétaire, ouverture du portique, etc.).

Le canal Bluetooth peut être refermé.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

On rappelle notamment que le mode de réalisation présenté est conforme à l'exemple d'un terminal mobile de type *Smartphone,* équipé en natif d'un module Bluetooth, mais aussi à celui d'une carte électronique ou tout autre dispositif terminal disposant des capacités requises (Bodypass et Bluetooth).

Dans le cas du terminal mobile de type *Smartphone,* deux modes de réalisation peuvent être envisagés sans sortir du contexte de l'invention :
- selon le premier mode, la sortie du démodulateur associé à l'antenne Bodypass est connectée (via un ensemble de composants adéquats) à un module radio de type Bluetooth (notamment BLE) qui est indépendant de celui du dispositif mobile. Avantageusement, les composants précités peuvent être agencés sur le même substrat, dit « composant Bodypass », piloté par exemple par un microprocesseur ou microcontrôleur en charge d'établir la communication BLE avec le dispositif lecteur.
- selon un second mode, la sortie du démodulateur associé à l'antenne Bodypass est connectée (via un ensemble de composants adéquats) au dispositif mobile, en charge d'établir la communication Bluetooth entre son propre module Bluetooth et le dispositif lecteur.

## Revendications

1. Procédé de communication sur un premier dispositif, dit terminal (1), apte à recevoir un premier message (M) de type NFC dans une onde porteuse radio (S) en utilisant des capacités de conduction d'onde électromagnétique d'un premier canal (BP) ayant pour support le corps d'un utilisateur porteur du terminal et à communiquer avec un second dispositif, dit lecteur, sur un second canal sans fils (BT, WIFI) ayant un support distinct du corps de 1 utilisateur,
ledit lecteur étant apte à émettre un message de type NFC dans une onde porteuse radio, le procédé étant **caractérisé en ce qu'**il comporte les étapes suivantes sur le terminal :
- réception (E1), sur le premier canal (BP), du premier message (M) de type NFC comportant au moins une première donnée d'appairage (ALEA) en provenance du lecteur,
ladite réception étant déclenchée par l'entrée de l'utilisateur dans la proximité du lecteur;
- établissement d'une session de communication (SBT) sur le second canal (BT) avec ledit second dispositif, grâce à ladite donnée d'appairage (ALEA) ;
- communication avec ledit second dispositif uniquement sur le second canal (BT) radio, indépendamment de la réception de données sur le premier canal.

2. Procédé de communication selon la revendication 1, caractérisé en en ce que l'établissement de ladite session de communication avec le second dispositif inclut une étape d'émission (E2) d'un second message (M') comportant au moins une seconde donnée d'appairage (ALEA') sur le second canal (BT), ladite seconde donnée d'appairage étant fonction de la première donnée d'appairage (ALEA).

3. Procédé de communication selon la revendication 1, **caractérisé en outre en ce que** le premier message (M) comporte également un identificateur (BODYP) de service.

4. Dispositif (1) de communication, dit terminal, apte à recevoir un premier message (M) de type NFC dans une onde porteuse radio (S) en utilisant des capacités de conduction d'onde électromagnétique d'un premier canal (BP) ayant pour support le corps d'un utilisateur (2) porteur du terminal (1), comportant les modules suivants :
- un module de communication (DEMOD, 205) apte à recevoir (E1) un message (M) de type NFC dans une onde porteuse radio (S) en utilisant des capacités de conduction d'onde électromagnétique d'un premier canal (BP) ayant pour support le corps de l'utilisateur (2)
- un module d'émission-réception (MBT, 206) apte à communiquer sur un second canal sans fils (BT) ayant un support distinct du corps de l'utilisateur (2) avec un second dispositif, dit lecteur (3) ;
**caractérisé en ce que** la communication sur le second canal est activée suite à la détection d'une donnée d'appairage (ALEA) dans un message (M) de type NFC porté par l'onde porteuse radio (S) reçue par le terminal (1) lorsque l'utilisateur (2) entre dans la proximité (P1) du lecteur.

5. Procédé de communication entre :
- un premier dispositif, dit terminal (1), apte à recevoir un premier message (M) de type NFC dans une onde porteuse radio (S) en utilisant des capacités de conduction d'onde électromagnétique d'un premier canal (BP) ayant pour support le corps d'un utilisateur (2) porteur du terminal et à communiquer sur un second canal sans fils (BT, WIFI) ayant un support distinct du corps de l'utilisateur, et
- un second dispositif, dit lecteur (3), apte à émettre un message (M) de type NFC dans une onde porteuse radio (S) sur le premier canal (BP) et à communiquer avec le terminal via le second canal (BT),
**caractérisé en ce qu'**il comporte les étapes de :
- émission (E21) par le lecteur, sur le premier canal (BP), d'un message (M) de type NFC comprenant au moins une donnée d'appairage (ALEA), l'émission étant déclenchée par l'entrée de l'utilisateur dans la proximité du lecteur;
- établissement d'une session de communication (SBT) sur le second canal (BT) entre le terminal et le lecteur, grâce à ladite donnée d'appairage (ALEA) ;
- communication entre les deux dispositifs uniquement sur le second canal (BT), indépendamment de la réception de données sur le premier canal.

6. Système de communication comprenant :
- un premier dispositif (1), dit terminal, comportant :
∘ un module de communication (DEMOD, 205) apte à recevoir (E1) un message (M) de type NFC dans une onde porteuse radio (S) en utilisant des capacités de conduction d'onde électromagnétique d'un premier canal (BP) ayant pour support le corps d'un utilisateur (2) porteur du terminal, ladite réception étant déclenchée par l'entrée de l'utilisateur dans la proximité du lecteur;
∘ un module d'émission-réception (MBT) apte à communiquer sur un second canal sans fils (BT) ayant un support distinct du corps de l'utilisateur ;
- un second dispositif (3), dit lecteur, comportant
∘ un module de communication (MOD, 304) apte à émettre (E21) un message (M) de type NFC dans une onde porteuse radio (S) sur le premier canal lorsque l'utilisateur entre dans la proximité du lecteur;
∘ un module d'émission-réception (BT) apte à communiquer avec le terminal sur le second canal sans fils (BT) ;
**caractérisé en ce que** la communication sur le second canal est activée suite à la détection d'une donnée d'appairage (ALEA) dans un message (M) porté par l'onde porteuse radio (S) reçue par le terminal (1) lorsque l'utilisateur rentre dans la proximité du lecteur (3).

7. Programme d'ordinateur apte à être mis en œuvre sur un dispositif terminal tel que défini dans la revendication 4, le programme comprenant des instructions de code qui, lorsque le programme est exécuté par un processeur, réalise les étapes du procédé selon la revendication 1.

## Patentansprüche

1. Kommunikationsverfahren auf einer ersten Vorrichtung, Endgerät (1) genannt, die dazu geeignet ist, eine erste Nachricht (M) vom Typ NFC auf einer Funkträgerwelle (S) zu empfangen, indem elektromagnetische Wellenleitfähigkeiten eines ersten Kanals (BP) genutzt werden, der den Körper eines Benutzers, der das Endgerät trägt, als Stützpunkt hat, und mit einer zweiten Vorrichtung, Lesegerät genannt, über einen zweiten drahtlosen Kanal (BT, WIFI) zu kommunizieren, der einen vom Körper des Benutzers verschiedenen Stützpunkt hat, wobei das Lesegerät dazu fähig ist, eine Nachricht vom Typ NFC auf einer Funkträgerwelle zu senden, wobei das Verfahren **dadurch gekennzeichnet ist, dass** es die folgenden Schritte auf dem Endgerät umfasst:
- Empfang (E1) der ersten Nachricht (M) vom Typ NFC auf dem ersten Kanal (BP), umfassend mindestens eine erste Paarungsdateneinheit (ALEA) vom Lesegerät, wobei der Empfang durch Eingabe des Benutzers in der Nähe des Lesegeräts ausgelöst wird;
- Aufbau einer Kommunikationssitzung (SBT) auf dem zweiten Kanal (BT) mit der zweiten Vorrichtung aufgrund der Paarungsdateneinheit (ALEA);
- Kommunikation mit der zweiten Vorrichtung nur auf dem zweiten Funkkanal (BT) unabhängig vom Empfang von Daten auf dem ersten Kanal.

2. Kommunikationsverfahren nach Anspruch 1, **dadurch gekennzeichnet, dass** der Aufbau der Kommunikationssitzung mit der zweiten Vorrichtung einen Schritt des Sendens (E2) einer zweiten Nachricht (M') aufweist, umfassend mindestens eine zweite Paarungsdateneinheit (ALEA') auf dem zweiten Kanal (BT), wobei die zweite Paarungsdateneinheit eine Funktion der ersten Paarungsdateneinheit (ALEA) ist.

3. Kommunikationsverfahren nach Anspruch 1, **dadurch gekennzeichnet, dass** die erste Nachricht (M) auch eine Dienstkennung (BODYP) umfasst.

4. Kommunikationsvorrichtung (1), Endgerät genannt, die dazu geeignet ist, eine erste Nachricht (M) vom Typ NFC auf einer Funkträgerwelle (S) zu empfangen, indem elektromagnetische Wellenleitfähigkeiten eines ersten Kanals (BP) genutzt werden, der den Körper eines Benutzers (2), der das Endgerät (1) trägt, als Stützpunkt hat, umfassend die folgenden Module:
- ein Kommunikationsmodul (DEMOD, 205), das dazu geeignet ist, eine Nachricht (M) vom Typ NFC auf einer Funkträgerwelle (S) zu empfangen (E1), indem elektromagnetische Wellenleitfähigkeiten eines ersten Kanals (BP) genutzt werden, der den Körper des Benutzers (2) als Stützpunkt hat;
- ein Sendeempfängermodul (MBT, 206), das dazu geeignet ist, auf einem zweiten drahtlosen Kanal (BT), der einen vom Körper des Benutzers (2) verschiedenen Stützpunkt hat, mit einer zweiten Vorrichtung, Lesegerät (3) genannt, zu kommunizieren;
**dadurch gekennzeichnet, dass** die Kommunikation auf dem zweiten Kanal infolge der Erkennung einer Paarungsdateneinheit (ALEA) in einer Nachricht (M) vom Typ NFC aktiviert wird, die von der Funkträgerwelle (S) getragen wird, die vom Endgerät (1) empfangen wird, wenn der Benutzer (2) in die Nähe (P1) des Lesegeräts eintritt.

5. Kommunikationsverfahren zwischen:
- einer ersten Vorrichtung, Endgerät (1) genannt, die dazu geeignet ist, eine erste Nachricht (M) vom Typ NFC auf einer Funkträgerwelle (S) zu empfangen, indem elektromagnetische Wellenleitfähigkeiten eines ersten Kanals (BP) genutzt werden, der den Körper eines Benutzers (2), der das Endgerät trägt, als Stützpunkt hat, und auf einem zweiten drahtlosen Kanal (BT, WIFI) zu kommunizieren, der einen vom Körper des Benutzers verschiedenen Stützpunkt hat, und
- einer zweiten Vorrichtung, Lesegerät (3) genannt, die dazu geeignet ist, eine Nachricht (M) vom Typ NFC auf einer Funkträgerwelle (S) auf dem ersten Kanal (BP) zu senden und über den zweiten Kanal (BT) mit dem Endgerät zu kommunizieren,
**dadurch gekennzeichnet, dass** es die folgenden Schritte umfasst:
- Sendung (E21) einer Nachricht (M) vom Typ NFC auf dem ersten Kanal (BP) durch das Lesegerät, umfassend mindestens eine Paarungsdateneinheit (ALEA), wobei die Sendung durch Eingabe des Benutzers in der Nähe des Lesegeräts ausgelöst wird;
- Aufbau einer Kommunikationssitzung (SBT) auf dem zweiten Kanal (BT) zwischen dem Endgerät und dem Lesegerät aufgrund der Paarungsdateneinheit (ALEA);
- Kommunikation zwischen den beiden Vorrichtungen nur auf dem zweiten Kanal (BT) unabhängig vom Empfang von Daten auf dem ersten Kanal.

6. Kommunikationssystem, umfassend:
- eine erste Vorrichtung (1), Endgerät genannt, umfassend:
o ein Kommunikationsmodul (DEMOD, 205), das dazu geeignet ist, eine Nachricht (M) vom Typ NFC auf einer Funkträgerwelle (S) zu empfangen (E1), indem elektromagnetische Wellenleitfähigkeiten eines ersten Kanals (BP) genutzt werden, der den Körper eines Benutzers (2), der das Endgerät trägt, als Stützpunkt hat, wobei der Empfang durch Eingabe des Benutzers in der Nähe des Lesegeräts ausgelöst wird;
o ein Sendeempfängermodul (MBT), das dazu geeignet ist, auf einem zweiten drahtlosen Kanal (BT), der einen vom Körper des Benutzers verschiedenen Träger hat, zu kommunizieren;
- eine zweite Vorrichtung (3), Lesegerät genannt, umfassend
o ein Kommunikationsmodul (MOD, 304), das dazu geeignet ist, eine Nachricht (M) vom Typ NFC auf einer Funkträgerwelle (S) auf dem ersten Kanal zu senden, wenn der Benutzer in die Nähe des Lesegeräts eintritt;
o ein Sendeempfängermodul (BT), das dazu geeignet ist, auf dem zweiten drahtlosen Kanal (BT) zu kommunizieren;
**dadurch gekennzeichnet, dass** die Kommunikation auf dem zweiten Kanal infolge der Erkennung einer Paarungsdateneinheit (ALEA) in einer Nachricht (M) vom Typ NFC aktiviert wird, die von der Funkträgerwelle (S) getragen wird, die vom Endgerät (1) empfangen wird, wenn der Benutzer wieder in die Nähe des Lesegeräts (3) eintritt.

7. Computerprogramm, das dazu geeignet ist, auf einer Endgerätevorrichtung nach Anspruch 4 umgesetzt zu werden, wobei das Programm Codeanweisungen umfasst, die bei Ausführung des Programms durch einen Prozessor die Schritte des Verfahrens nach Anspruch 1 durchführen.

## Claims

1. Method for communication on a first device, called terminal (1), capable of receiving a first message (M) of NFC type in a radio carrier wave (S) by using the electromagnetic wave conduction capabilities of a first channel (BP) whose medium is the body of a user holding the terminal and of communicating with a second device, called reader, over a second, wireless channel (BT, WIFI) having a medium distinct from the body of the user, said reader being capable of transmitting a message of NFC type in a radio carrier wave, the method being **characterized in that** it comprises the following steps on the terminal:
- reception (E1), over the first channel (BP), of the first message (M) of NFC type comprising at least one first pairing datum (ALEA) originating from the reader, said reception being triggered by the entry of the user into the proximity of the reader;
- establishment of a communication session (SBT) over the second channel (BT) with said second device, using said pairing datum (ALEA);
- communication with said second device only over the second radio channel (BT), independently of the reception of data over the first channel.

2. Communication method according to Claim 1, **characterized in that** the establishment of said communication session with the second device includes a step of transmission (E2) of a second message (M') comprising at least one second pairing datum (ALEA') over the second channel (BT), said second pairing datum being a function of the first pairing datum (ALEA).

3. Communication method according to Claim 1, further **characterized in that** the first message (M) also comprises a service identifier (BODYP).

4. Communication device (1), called terminal, capable of receiving a first message (M) of NFC type in a radio carrier wave (S) by using the electromagnetic wave conduction capabilities of a first channel (BP) whose medium is the body of a user (2) holding the terminal (1), comprising the following modules:
- a communication module (DEMOD, 205) capable of receiving (E1) a message (M) of NFC type in a radio carrier wave (S) by using the electromagnetic wave conduction capabilities of a first channel (BP) whose medium is the body of the user (2);
- a transceiver module (MBT, 206) capable of communicating over a second, wireless channel (BT) having a medium distinct from the body of the user (2) with a second device, called reader (3);
**characterized in that** the communication over the second channel is activated following the detection of a pairing datum (ALEA) in a message (M) of NFC type carried by the radio carrier wave (S) received by the terminal (1) when the user (2) enters into the proximity (P1) of the reader.

5. Method for communication between:
- a first device, called terminal (1), capable of receiving a first message (M) of NFC type in a radio carrier wave (S) by using the electromagnetic wave conduction capabilities of a first channel (BP) whose medium is the body of a user (2) holding the terminal and of communication over a second, wireless channel (BT, WIFI) having a medium distinct from the body of the user, and
- a second device, called reader (3), capable of transmitting a message (M) of NFC type in a radio carrier wave (S) over the first channel (BP) and of communicating with the terminal via the second channel (BT), **characterized in that** it comprises the steps of:
- transmission (E21) by the reader, over the first channel (BP), of a message (M) of NFC type comprising at least one pairing datum (ALEA), the transmission being triggered by the entry of the user into the proximity of the reader;
- establishment of a communication session (SBT) over the second channel (BT) between the terminal and the reader, using said pairing datum (ALEA);
- communication between the two devices only over the second channel (BT), independently of the reception of data over the first channel.

6. Communication system comprising:
- a first device (1), called terminal, comprising:
o a communication module (DEMOD, 205) capable of receiving (E1) a message (M) of NFC type in a radio carrier wave (S) by using the electromagnetic wave conduction capabilities of a first channel (BP) whose medium is the body of a user (2) holding the terminal, said reception being triggered by the entry of the user into the proximity of the reader;
o a transceiver module (MBT) capable of communicating over a second, wireless channel (BT) having a medium distinct from the body of the user;
- a second device (3), called reader, comprising:
o a communication module (MOD, 304) capable of transmitting (E21) a message (M) of NFC type in a radio carrier wave (S) over the first channel when the user enters into the proximity of the reader;
o a transceiver module (BT) capable of communicating with the terminal over the second, wireless channel (BT);
**characterized in that** the communication over the second channel is activated following the detection of a pairing datum (ALEA) in a message (M) carried by the radio carrier wave (S) received by the terminal (1) when the user enters into the proximity of the reader (3).

7. Computer program that can be implemented on a terminal device as defined in Claim 4, the program comprising code instructions which, when the program is run by a processor, performs the steps of the method according to Claim 1.
